# EUROPEAN PATENT APPLICATION

(11) **EP 3 761 288 A1**
(43) Date of publication of application: **06.01.2021**
(21) Application number: 18909361.0
(22) Date of filing: 16.11.2018
(51) Int. Cl.: G09B 5/06, G06K 7/10

(54) **PRINT, AND PRODUCTION METHOD AND PRODUCTION SYSTEM FOR TOUCH-AND-TALK CONTENT OF PRINT**

(30) Priority: 16.03.2018 CN 201810216610
(71) Applicant: MPEN Technology (Shenzhen) Co., Ltd., Shenzhen, Guangdong 518000 (CN)
(72) Inventor: HU, Feng, Shenzhen, Guangdong 518000 (CN); ZHANG, Zhen, Shenzhen, Guangdong 518000 (CN); ZHANG, Dagang, Shenzhen, Guangdong 518000 (CN)
(74) Representative: Sun, Yiming
(86) International application number: PCT/CN2018/115947
(87) International publication number: WO 2019/174292

(57) **Abstract**

Disclosed are a print for touch-read, and a production method and production system for touch-read content of a print. The production method for touch-read content of a print comprises the following steps: S1: coding: when receiving a coordinate coding signal, dividing a print according to virtual grid lines of M rows by N columns, wherein the virtual grid lines divide the print into multiple virtual spaces, each virtual space being provided with a code value, and the code values are continuously set according to row coordinates and column coordinates of the virtual grid lines in an increasing or decreasing manner; and S2: planning touch-read content: before or after the coding is completed, choosing a touch-read area on the print, and planning touch-read content associated with the touch-read area.

## Description

### TECHNICAL FIELD

The present application relates to the technical field of prints, and in particular, to a print for touch-read, and a production method and production system for touch-read content of a print.

### BACKGROUND

The production process of existing prints is as follows: (1) choose a touch-read area, and produce touch-read content in the touch-read area. Specifically, take an example in which a banana-shaped touch-read area is set on a touch-read book. A banana-shaped touch-read area is first chosen on a print, and then a corresponding touch-read pronunciation "banana" is marked on the banana-shaped touch-read area; (2) Print identical touch-read code values in the touch-read area. For example, touch-read code values in the banana-shaped touch-read area are 1, while code values in remaining areas are 0.

Since the touch-read code values within the touch-read area are fixed after touch-read code values have been printed on the existing print, it is impossible to add a new touch-read area, which brings inconvenience to the updating of the touch-read area and causes high production cost of the print.

### SUMMARY

A primary objective of the present application is to provide a production method for touch-read content of a print, aiming to facilitate the updating of touch-read areas of a print and reduce production cost of the print.

In order to achieve the objective above, the production method for touch-read content of a print according to the present application includes following steps of:
S1: coding: when receiving a coordinate code laying signal, dividing the print according to virtual grid lines of M rows by N columns, wherein the virtual grid lines divide the print into multiple virtual spaces, each virtual space is provided with a code value, and the code values are continuously set according to row coordinates and column coordinates of the virtual grid lines in an increasing or decreasing manner; and
S2: planning touch-read content: before or after coding is completed, choosing a touch-read area on the print, and planning touch-read content associated with the touch-read area.

In an embodiment, the step of choosing touch-read area on the print, and planning touch-read content associated with the touch-read area includes steps of:
S21: simulating the touch-read area by superposition of a series of basic shapes;
S22: associating the touch-read area with a touch-read operation to form a hotspot; and S23: packaging all hotspots related to the print together to generate a touch-read resource package.

In an embodiment, in the step of coding, types and code segments of the code values are assigned uniformly and globally, so that code values within all pages of the touch-read print do not repeat.

In an embodiment, for the same touch-read print, the touch-read contents have different versions, each version having corresponding identification information, the identification information including creation time and/or author.

In an embodiment, the step of planning touch-read content associated with the touch-read area can be customized through software.

In addition, in order to achieve the objective above, the present application further provides a production system for touch-read content of a print. The production system includes a memory, a processor, and a production program for touch-read content of a print, the production program for touch-read content of a print being stored on the memory and being capable of being executed on the processor. The production program for touch-read content of a print, when executed by the processor, implements steps of the production method for touch-read content of a print as described above.

In addition, in order to achieve the objective above, the present application further provides a print. The print is a print which is printed using the production method for touch-read content of a print as described above.

According to the present application, when receiving a coordinate coding signal, the print is divided according to virtual grid lines of M rows by N columns, wherein the virtual grid lines divide the print into multiple virtual spaces, each virtual space being provided with a code value, and the code values are continuously set according to row coordinates and column coordinates of the virtual grid lines in an increasing or decreasing manner; and before or after coding is completed, the step of planning touch-read content is performed, wherein the step of planning touch-read content and the step of coding are independent of each other. The code values are continuously set according to row coordinates and column coordinates of the virtual grid lines in an increasing or decreasing manner, and thus a code value at each position has corresponding position coordinates. In this way, when the touch-read area needs to be updated, a newly-added touch-read area will have new position coordinates of code values and therefore there is no need to reprint the print, which can facilitate the updating of the touch-read area of the print and reduce production cost of the print.

### BRIEF DESCRIPTION OF THE DRAWINGS

Fig. 1 is a schematic flowchart of a production method for touch-read content of a print according to the present application;
Fig. 2 is a schematic diagram of simulating a banana-shaped touch-read area by superposition of rectangles;

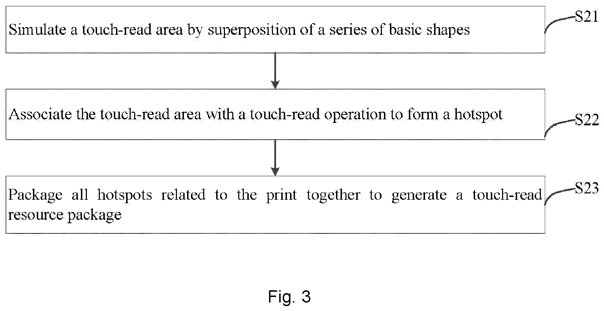

Fig. 3 is a schematic diagram of a step of planning touch-read content;
Fig. 4 is a schematic flowchart of assignment of global coding data;
Fig. 5 is a schematic diagram of independently created touch-read content;
Fig. 6 is a schematic diagram of an embodiment of touch-read content created in multiple versions;
Fig. 7 is a schematic diagram of another embodiment of touch-read content created in multiple versions; and
Fig. 8 is a schematic flowchart of customizing touch-read content through software.

The implementation of the objective, functional features and advantages of the present application will be further described in conjunction with the embodiments and with reference to the accompanying drawings.

### DETAILED DESCRIPTION OF THE EMBODIMENTS

The technical solutions in embodiments of the present application will be clearly and completely described below in conjunction with drawings in the embodiments of the present application. Obviously, the described embodiments are only a part of embodiments, not all embodiments, of the present application. All other embodiments obtained by those of ordinary skill in the art based on the embodiments in the present application without inventive efforts fall into the protection scope of this application.

It should be noted that if a directional indication (such as "up", "down", "left", "right", "front", "back", etc.) is involved in the embodiments of this application, the directional indication is only used to explain the relative positional relationship, movement, etc. between components in a specific posture (as shown in the drawings), and if the specific posture changes, the directional indication will also change accordingly.

In addition, if there are descriptions relating to "first", "second" and the like in the embodiments of the present application, the descriptions relating to "first", "second" and the like are only used for descriptive purposes and cannot be understood as indicating or implying their relative importance or implicitly indicating the number of technical features indicated. Thus, for a feature defined with "first" and "second", it may explicitly or implicitly indicate that at least one such feature is included. In addition, the technical solutions of the various embodiments can be combined with each other, but this must be based on what can be achieved by those of ordinary skill in the art. When a combination of technical solutions is contradictory or cannot be achieved, such a combination of technical solutions should not be considered to exist and does not fall within the protection scope of this application.

The present application provides a production method for touch-read content of a print, which can conveniently update touch-read areas and thus reduce cost of prints.

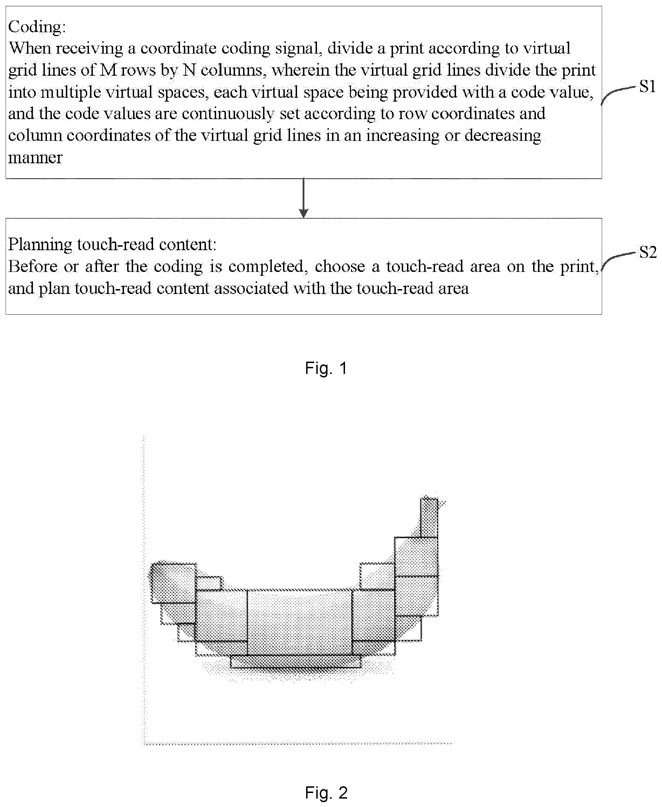

A production method for touch-read content of a print provided in the present application will be described below with reference to the accompanying drawings. As shown in Fig. 1, the production method for touch-read content of a print includes the following steps of:
S1: coding: when receiving a coordinate coding signal, dividing a print according to virtual grid lines of M rows by N columns, wherein the virtual grid lines divide the print into multiple virtual spaces, each virtual space is provided with a code value, and the code values are continuously set according to row coordinates and column coordinates of the virtual grid lines in an increasing or decreasing manner; and
S2: planning touch-read content: before or after coding is completed, choosing a touch-read area on the print, and planning touch-read content associated with the touch-read area.

Specifically, now take an example in which a touch-read area is chosen after coding. After coding is completed, a touch-read area is chosen on the print coded with code values, coordinate values of the code values in the touch-read area are determined according to a boundary line of the touch-read area, and touch-read content is planned in the touch-read area according to the coordinate values of the code values in the touch-read area. Since the code values are continuously set according to row coordinates and column coordinates of the virtual grid lines in an increasing or decreasing manner, after a touch-read area is delineated on the print, the touch-read area will cover code values within a certain coordinate range. In this way, it only needs to define the code values within the coordinate range as corresponding touch-read content or touch-read operation. When a touch-read pen scans the code values, the corresponding touch-read content can be read or the corresponding touch-read operation can be called.

Now the coding process for the print will be further explained. During coding, the print is continuously coded with code values row by row. Assume that a starting code value for the print is 100, and the print has 5 pages, each page being 100 mm wide and 200 mm high. A virtual space occupies a square area with a length of 1 mm. In this way, there will be 20,000 virtual spaces on one page (with 100 virtual spaces in one row and 200 rows in total). According to the continuity rule, a range of code values for the first page is from 100 to 20,099, a range of code values for the second page from 20,100 to 40,099, and so on for the third page et seq. In this way, when a code value of 21,150 is recognized, it can be calculated that this code value is located in the 11th row and 50th column of the second page, i.e., an approximate location (50 mm, 11 mm) in the second page. The accuracy herein is limited by the size of the virtual space. In the present embodiment, the area of the virtual space is 1 mm², but this is not limited in the present application. In other embodiments, the area of the virtual space may also be other values.

Now the process of choosing a touch-read area after coding is explained in detail. Assume that the touch-read area has a banana shape. The banana shape occupies code values within a certain coordinate range, and the code values within the above coordinate range are defined as touch-read content of "banana". In this way, when the touch-read pen reaches the touch-read area, the touch-read pen can make a touch-read voice "banana".

In the production method for touch-read content of a print provided in the present application, code values with different position coordinates are coded first, and then the touch-read area is chosen. Thus, when the touch-read area needs to be updated, a new touch-read area can be easily added without reprinting the print. Hence, it is convenient to update the touch-read content of the print and thus the production cost of the print can be reduced.

For ease of understanding, take an example for description now. Assume that only a banana-shaped touch-read area has been printed on an original page of a print. Now, it is desired to add an apple-shaped touch-read area. For an existing print, since code values in the banana-shaped touch-read area are all 1, and code values of the remaining pages are all 0, it is impossible to add a new touch-read area. However, code values with different position coordinates are coded on pages of the print provided in the present application. Therefore, when a new apple-shaped touch-read area is added, the apple-shaped touch-read area occupies a certain coordinate range of code values, and the new apple-shaped touch-read area can be added by defining the code values within the above coordinate range as a touch-read pronunciation "apple"; thus, it can facilitate the updating of the touch-read area of the print.

Further, considering that the shapes of a touch-read area are complex and changeable (apple shape, banana shape, etc.), in order to facilitate the simulation of arbitrary shapes, in an embodiment of this application, the step of choosing a touch-read area on the print and planning touch-read content associated with the touch-read area includes steps of: S21: simulating the touch-read area by superposition of a series of basic shapes; S22: associating the touch-read area with a touch-read operation to form a hotspot; and S23: packaging all hotspots related to the print together to generate a touch-read resource package.

Specifically, referring to Fig. 2, in this embodiment, a banana-shaped hotspot is simulated by superposition of a series of rectangles. In this way, a touch-read area of a complex shape can be easily simulated. As a preferred embodiment, the size of the basic shape can be adaptively changed according to the shape of the touch-read area. As shown in Fig. 2, the area of the middle rectangular region of the banana shape is larger while the areas of the rectangular regions on the edge of the banana shape are smaller. The banana-shaped touch-read area thus can be accurately simulated.

However, the design of the present application is not limited to this. In other embodiments, the basic shape may also be one or a combination of a triangle, a circle, and an ellipse.

Further, in order to enable global data resource management for the touch-read content of the print, in an embodiment of the present application, in the step of coding, types and code segments of the code values are uniformly and globally assigned, so that the code values within all pages of the touch-read print do not repeat. In this way, a code value can be used to directly locate a corresponding print and a position on a page. Here, it should be noted that the same type of code can be used for coding, or different types of code can be used in combination; for the same page of the print, different code segments can be used for multiple times of coding.

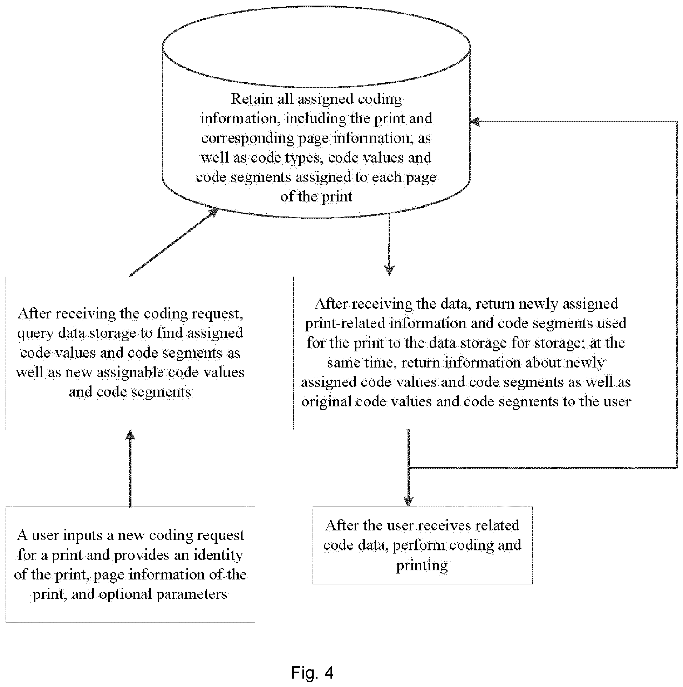

Referring to Fig. 4, first, a user inputs a new coding request for a print and provides an identifier of the print, page information (page number, size of each page) of the print, and optional parameters (such as related coding type and some printing parameters). Optionally, if coding has been performed on the print before, some or all of the pages of the print may be specified to request for re-coding; after reception of the re-coding request, data storage is queried to find assigned code values and code segments as well as new assignable code values and code segments; then all the assigned coding information is retained, including the print, corresponding page information, as well as code types, code values and code segments assigned to each page of the print; and after reception of the data, the newly assigned print-related information and code segments used for the print are returned to the data storage for storage. At the same time, information about the newly assigned code values and code segments as well as the original code values and code segments is returned to the user; and after the user receives the related code data, coding and printing can be performed.

Specifically, the print includes a plurality of pages, and coordinate values of code values within the plurality of pages do not repeat. The management of touch-read resources of traditional prints is segmented. Generally, each publishing house, unit, or individual manages its own information, and there lacks unified management and planning. This will cause conflicts in touch-read code values among each other, or it is inconvenient to find new resources. Taking traditional touch-read codes (such as *Sonix* II code) as an example, in locating touch-read content, like reading a new touch-read book, a user have to first click the cover (the code value for the cover locates a book) and then click the content inside the book, which is inconvenient to operate. In order to solve this problem, the print provided in this application adopts unified data resource management.

Specifically, the unified data resource management includes: globally assigning coordinate values and coding rules of code values corresponding to each print and each page of a print. In this way, a touch-read device can directly locate specific position coordinates in a specific page of a corresponding print after recognizing any code value. Optionally, the time of coding and the corresponding printing house can be recorded globally, so that additional information can be provided to a touch-read pen. To achieve global assignment, a centralized server and a database can be used for unified management; blockchain technology can also be used for distributed management. When applying for a range of code values for a new print, approval from the majority of all participants is needed.

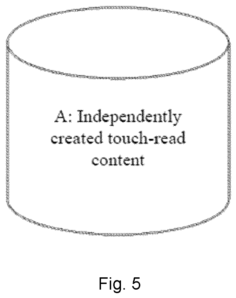

Most of the existing touch-read prints are as shown in Fig. 5 and include only an independently created touch-read content. In one embodiment of the present application, multiple versions of touch-read content can be created for a print.

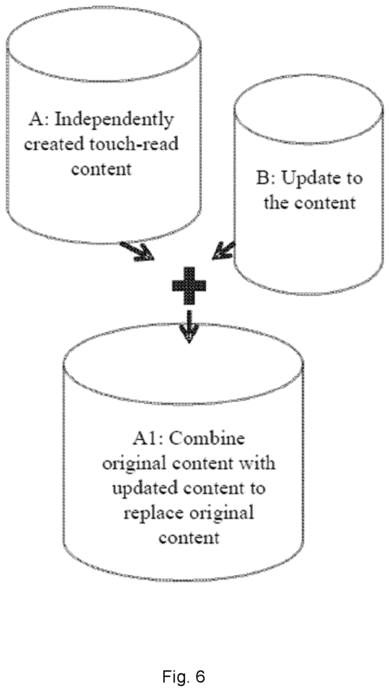

In a first embodiment of the present application, as shown in Fig. 6, the content of the print can be updated, so that an original independently created touch-read content A and an updated content B can be combined to form a new content A1. The new content A1 can completely replace the original content A.

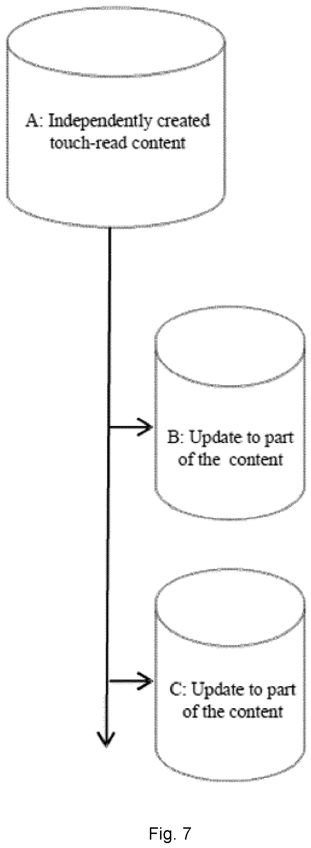

In a second embodiment of the present application, as shown in Fig. 7, there are two updated contents for the print. Specifically, the updated contents include a partially updated content B and a partially updated content C regarding the original content A. In use, an updated content and the original content, such as A and B, or A and C, are used simultaneously. It should be noted here that when there are two or more updated contents, the update contents can be selected according to information such as creation time or author information.

Further, considering that touch-read contents of existing prints are produced by publishing organizations, in an embodiment of the present application, the step of planning touch-read content associated with the touch-read area can be customized through software, in order to meet the requirements of personalized customization.

In this way, users can create hotspots and touch-read contents by themselves, and transmit these hotspots and touch-read contents to recipients for use, through social tools such as WeChat and QQ or though other interactive apps and tools. For example, parents can use an app to choose a table-shaped touch-read area on a print, and define code values within the table-shaped touch-read area as touch-read voice "desk". This allows parents to record corresponding touch-read voice for their children, so that the children can feel more cordial to the touch-read voice so as to arouse the children's interest in learning.

As a preferred embodiment, users who customizes prints can also share their customized contents through apps such as WeChat and QQ, and users who use a touch-read pen can preferentially playback said customized contents.

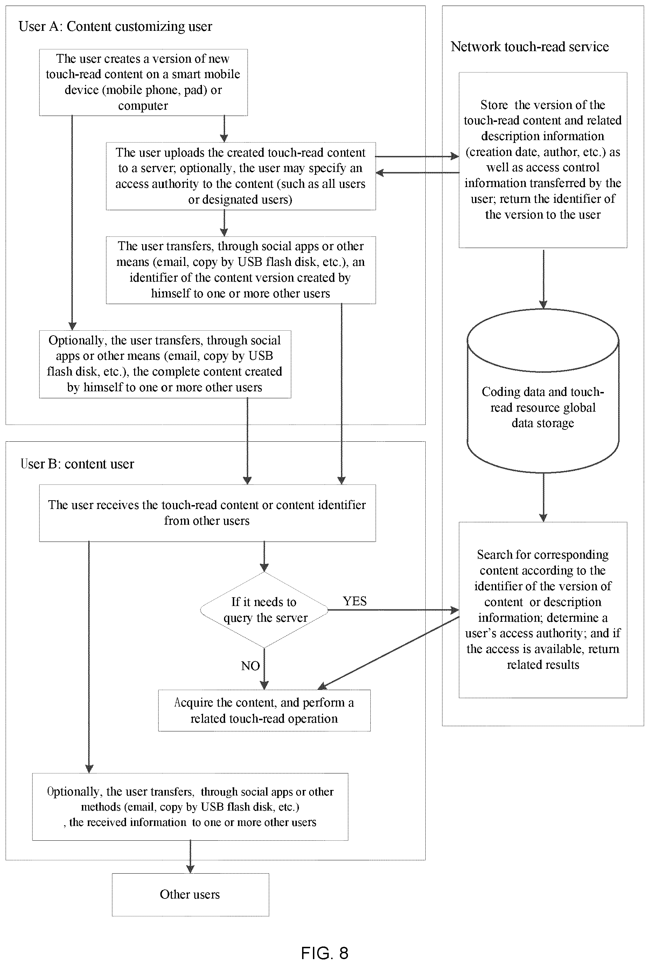

Specifically, referring to Fig. 8, content customizing user A: the user creates a new version of touch-read content on a smart mobile device (mobile phone, pad) or computer; the user transmits, through social apps or through other means (email, copy by USB flash disk, etc.), the complete content created by himself to one or more other users, or the user uploads the created touch-read content to a server. Optionally, the user can specify an access authority to the content (such as all users or designated users), and the user transfers, through social apps or other means (email, copy by USB flash disk, etc.), an identifier of the content version created by himself to one or more other users. Network touch-read service of a server: store the version of touch-read content and related description information (creation date, author, etc.) and access control information transferred by the user; return an identifier of the version to the user; and store coding data and touch-read resource global data. Content user: the user receives the touch-read content or content identifier from other users; if it needs to query the server, depending on the identifier of the content version or description information, the corresponding content can be searched and the user's access authority can be determined, and if the access is available, the related results can be returned; if it does not need to query the server, the content can be acquired, and the related touch-read operation can be performed.

Further, as for the method of obtaining and updating touch-read resources by a touch-read pen, in addition to the traditional method of downloading by individuals or manually updating with USB flash disks, a touch-read pen can also perform following innovative online updates if it can connect the network. After dot matrix coordinates of code values are recognized, if the touch-read pen itself does not have corresponding related page information, or there is no corresponding touch-read resource, the dot matrix coordinates can be transmitted to the server; the server can perform a query and searches, depending on the dot matrix coordinates, for global prints, pages and ranges of code values to find the corresponding print and corresponding page and then find the corresponding touch-read content or touch-read operation; the server finds the corresponding touch-read content or touch-read operation according to the dot matrix coordinates of the code values, and returns the related touch-read content or touch-read operation control instructions to the touch-read pen; and the touch-read pen performs the specific touch-read operation or plays back the corresponding touch-read voice.

If touch-read resources are stored on the touch-read pen, the updates and latest data can also be obtained by querying the server. Touch-read resources and corresponding versions may be available on the Internet for touch-read devices to access and use. Access needs to be authenticated, and only those that have a related authorization can access the related resources.

In addition, the present application further provides a production system for touch-read content of a print. The production system includes a memory, a processor, and a production program for touch-read content of a print, the production program being stored on the memory and being capable of being executed on the processor. The production program for touch-read content of a print, when executed by the processor, implements steps of the production method for touch-read content of a print as described above. The specific working mode of the production system for touch-read content of a print provided in the present application is basically the same as the various embodiments of the production method for touch-read content of a print as described above, and will not be repeated here.

Those of ordinary skill in the art should understand that the memory stores executable instructions, and the processor executes the executable instructions to implement the methods described in the various embodiments described above. Those of ordinary skill in the art should further understand that various software modules or software units may be inherently stored in the memory and executed by the processor.

In addition, the present application further provides a print. The print is a print printed using the production method for touch-read content of a print as described above. Since the print is formed by the production method described above, the print can have the beneficial effects associated with the production method for touch-read content of a print as described above, and therefore this will not be repeated.

Further, the print can also realize intelligent selection of multiple versions of touch-read resource. The touch-read content of the print has different versions, and the touch-read content of different versions may be set to different priorities according to a preset logic.

Specifically, as for content planning and production, after the initial production is completed, modifications can be made at different subsequent time points; or there may be different versions or modifications made by different producers. The current conventional practice is to combine different versions of touch-read resource into one version and provide same to the touch-read pen. The method provided in this application is to provide a basic version, a modified version, and a corresponding time point or producer information to the touch-read pen. In this way, the touch-read pen can sort different touch-read resources according to a set logic, query the touch-read resources in turn and determine whether there is a touch-read voice or operation corresponding to the coordinates or code values. If the voice or operation is found, said operation is performed; if not, the operation will be searched in a next resource in turn.

Sorting according to the preset logic includes sorting according to modification time of touch-read content and sorting according to author of touch-read content. For example, sorting according modification time may give priority to the latest touch-read resources, while sorting according to author of touch-read content may give priority to resources made by the teacher of the user of the touch-read pen.

This method can be effective in many scenarios (but not limited to the following scenarios). For example, if the amount of the updated content is relatively small, a relatively small touch-read resource package can be produced and distributed to users. Since the touch-read resource package is relatively small, it will greatly facilitate the process of distributing updates. In addition, the need of customization of part of the content can be met, for example, teachers or parents can customize some touch-read voices or hotspots and transmit same to students, so that students can use these customized contents.

Further, hybrid coding or multiple time of coding is performed on the print.

Hybrid coding means that the print provided in the present application can be used in combination with the existing method in which code value corresponds to touch-read area when coding is performed on the print. Specifically, for the print provided in the present application, some of the determined touch-read areas can be coded according to the method in which code value corresponds to touch-read area, and the remaining areas can be coded according to the method in which position coordinate corresponds to touch-read area. In this way, upon recognition and determination by the touch-read pen, it can be determined, according to the type of a detected code value, whether common code values correspond to the touch-read area or code values with position coordinates correspond to the touch-read area.

Multiple times of coding means that when printing a print using the production method for touch-read content of a print provided in this application, during coding, code values of different coordinates may be coded on all pages or some pages of the same print at different time or at different printing locations, and the time or locations corresponding to code values of different coordinates can be recorded. In this way, on the one hand, touch-read resources in the same touch-read area can be used; on the other hand, the coding time or printing location of the print can also be known. In addition, as needed later, different hotspots, different voices or different touch-read operations may be produced for the print of the same touch-read content according to different coding time or different printing locations.

Further, the print also has a function of book-screen interaction. Specifically, after the print is coded with coordinates, book-screen interaction can be realized. The term "book" means that the touch-read pen performs touch-read operations on the print; the term "screen" means that the content on a page of the print is displayed on the screen of an electronic device and the corresponding position on the page is displayed by means of mouse click or finger click; and the term "interaction" means that a touch-read device and an electronic device with a large screen can communicate the coordinate position on the clicked page to each other through a certain connection means (such as Bluetooth connection or WiFi connection) to produce related interactive effects. For example, after the touch-read pen clicks the print coded with coordinates, the touch-read pen can transmit the specific clicked page and coordinate information to the electronic device with the large screen and display, on the large screen, a related operation corresponding to the coordinates. For example, a specific scenario is as follows: in classroom teaching, a position where the teacher or student clicks on their own books can be transferred to a computer and a large screen of a projection device so that the clicked position can be displayed on the large screen, and sounds can be made through loudspeaker so that the whole class can watch or study together.

In practical applications, there are various possible requirements, which may lead to differences in coding area, selection of code segment, etc. from the above description. For example, code for cover is unique, but code for inner page is shared in different prints. This is generally to save code segment space. For another example, there are cases where coding is performed for only some areas of a page. This is generally because certain areas do not need coding, or coding cannot be performed in these areas. However, as long as coding is applicable to the method described above, resources then can be produced after the print is issued and the shape and content of hotspots can be changed, which also falls within the scope of the present application.

The above descriptions are only preferred embodiments of this application, and do not therefore limit the scope of this application. Under the inventive concept of this application, any equivalent structural transformations made using the contents of the description and drawings of this application or directly/indirectly applied in other related technical fields, are included in the scope of protection of the present application.

## Claims

1. A production method for touch-read content of a print, wherein the production method comprises t following steps of:
S1: coding: when receiving a coordinate coding signal, dividing a print according to virtual grid lines of M rows by N columns, wherein the virtual grid lines divide the print into multiple virtual spaces, each virtual space being provided with a code value, and the code values are continuously set according to row coordinates and column coordinates of the virtual grid lines in an increasing or decreasing manner; and
S2: planning touch-read content: before or after coding is completed, choosing a touch-read area on the print, and planning touch-read content associated with the touch-read area.

2. The production method for touch-read content of a print according to claim 1, wherein the step of choosing a touch-read area on the print, and planning touch-read content associated with the touch-read area comprises steps of:
S21: simulating the touch-read area by superposition of a series of basic shapes;
S22: associating the touch-read area with a touch-read operation to form a hotspot; and
S23: packaging all hotspots related to the print together to generate a touch-read resource package.

3. The production method for touch-read content of a print according to claim 1, wherein in the step of coding, types and code segments of the code values are assigned uniformly and globally, so that code values within all pages of the touch-read print do not repeat.

4. The production method for touch-read content of a print according to claim 2, wherein in the step of coding, types and code segments of the code values are assigned uniformly and globally, so that code values within all pages of the touch-read print do not repeat.

5. The production method for touch-read content of a print according to claim 1, wherein for the same touch-read print, the touch-read contents have different versions, each version having corresponding identification information, the identification information including creation time and/or author.

6. The production method for touch-read content of a print according to claim 2, wherein for the same touch-read print, the touch-read contents have different versions, each version having corresponding identification information, the identification information including creation time and/or author.

7. The production method for touch-read content of a print according to claim 1, wherein the step of planning touch-read content associated with the touch-read area can be customized through software.

8. The production method for touch-read content of a print according to claim 2, wherein the step of planning touch-read content associated with the touch-read area can be customized through software.

9. A production system for touch-read content of a print, wherein the production system comprises a memory, a processor, and a production program for touch-read content of a print, the production program for touch-read content of a print being stored on the memory and being capable of being executed on the processor, wherein the production program for touch-read content of a print, when executed by the processor, implements a production method for touch-read content of a print, the production method for touch-read content of a print comprising following steps of:
S1: coding: when receiving a coordinate coding signal, dividing a print according to virtual grid lines of M rows by N columns, wherein the virtual grid lines divide the print into multiple virtual spaces, each virtual space being provided with a code value, and the code values are continuously set according to row coordinates and column coordinates of the virtual grid lines in an increasing or decreasing manner; and
S2: planning touch-read content: before or after coding is completed, choosing a touch-read area on the print, and planning touch-read content associated with the touch-read area.

10. The production system for touch-read content of a print according to claim 9, wherein the step of choosing a touch-read area on the print, and planning touch-read content associated with the touch-read area comprises steps of:
S21: simulating the touch-read area by superposition of a series of basic shapes;
S22: associating the touch-read area with a touch-read operation to form a hotspot; and
S23: packaging all hotspots related to the print together to generate a touch-read resource package.

11. The production system for touch-read content of a print according to claim 9, wherein in the step of coding, types and code segments of the code values are assigned uniformly and globally, so that code values within all pages of the touch-read print do not repeat.

12. The production system for touch-read content of a print according to claim 10, wherein in the step of coding, types and code segments of the code values are assigned uniformly and globally, so that code values within all pages of the touch-read print do not repeat.

13. The production system for touch-read content of a print according to claim 9, wherein for the same touch-read print, the touch-read contents have different versions, each version having corresponding identification information, the identification information including creation time and/or author.

14. The production system for touch-read content of a print according to claim 10, wherein for the same touch-read print, the touch-read contents have different versions, each version having corresponding identification information, the identification information including creation time and/or author.

15. The production system for touch-read content of a print according to claim 9, wherein the step of planning touch-read content associated with the touch-read area can be customized through software.

16. The production system for touch-read content of a print according to claim 10, wherein the step of planning touch-read content associated with the touch-read area can be customized through software.

17. A print, wherein the print is a print printed using a production method for touch-read content of a print, the production method for touch-read content of a print comprising the following steps of:
S1: coding: when receiving a coordinate coding signal, dividing a print according to virtual grid lines of M rows by N columns, wherein the virtual grid lines divide the print into multiple virtual spaces, each virtual space being provided with a code value, and the code values are continuously set according to row coordinates and column coordinates of the virtual grid lines in an increasing or decreasing manner; and
S2: planning touch-read content: before or after coding is completed, choosing a touch-read area on the print, and planning touch-read content associated with the touch-read area.

18. The print according to claim 17, wherein the step of choosing a touch-read area on the print, and planning touch-read content associated with the touch-read area comprises steps of:
S21: simulating the touch-read area by superposition of a series of basic shapes;
S22: associating the touch-read area with a touch-read operation to form a hotspot; and
S23: packaging all hotspots related to the print together to generate a touch-read resource package.

19. The print according to claim 17, wherein in the step of coding, types and code segments of the code values are assigned uniformly and globally, so that code values within all pages of the touch-read print do not repeat.

20. The print according to claim 17, wherein for the same touch-read print, the touch-read contents have different versions, each version having corresponding identification information, the identification information including creation time and/or author.
